# EUROPEAN PATENT APPLICATION

(11) **EP 4 383 424 A1**
(43) Date of publication of application: **12.06.2024**
(21) Application number: 23843253.8
(22) Date of filing: 11.07.2023
(51) Int. Cl.: H01M 50/242, H01M 50/211, H01M 10/6551, H01M 50/30, H01M 50/249, H01M 50/24, H01M 10/658

(54) **BATTERY PACK AND VEHICLE INCLUDING SAME**

(30) Priority: 20.07.2022 KR 20220089911; 20.07.2022 KR 20220089941; 07.03.2023 KR 20230030192
(71) Applicant: LG Energy Solution, Ltd., Seoul 07335 (KR)
(72) Inventor: PARK, Jin-Yong, Daejeon 34122 (KR); KWON, Woo-Yong, Daejeon 34122 (KR); LEE, Myung-Woo, Daejeon 34122 (KR); KIM, Seung-Joon, Daejeon 34122 (KR); KIM, In-Soo, Daejeon 34122 (KR); CHUNG, Se-Yun, Daejeon 34122 (KR); CHI, Ho-June, Daejeon 34122 (KR); YOON, Hyun-Mo, Daejeon 34122 (KR)
(74) Representative: Plasseraud IP
(86) International application number: PCT/KR2023/009893
(87) International publication number: WO 2024/019402

(57) **Abstract**

Disclosed are a battery pack and a vehicle including the same. A battery pack according to an embodiment of the present disclosure includes a battery assembly including a plurality of cell units; and a pack case accommodating the battery assembly in the internal space, wherein each cell unit includes at least one battery cell and a cell cover at least partially surrounding the outside of the at least one battery cell, wherein a venting space is provided between the cell cover and the battery cell.

## Description

### TECHNICAL FIELD

The present disclosure relates to a battery pack and a vehicle, and more specifically, to a battery pack manufactured by the cell to pack method and a vehicle including the same. The present application claims priority to Korean Patent Application No. 10-2022-0089911 and Korean Patent Application No. 10-2022-0089941 filed on July 20, 2022 and Korean Patent Application No. 10-2023-0030192 filed on March 7, 2023, the disclosures of which are incorporated herein by reference.

### BACKGROUND ART

In general, secondary batteries refer to batteries enabling repeated charge/ discharge, such as lithium-ion batteries, lithium polymer batteries, nickel cadmium batteries, nickel hydrogen batteries, nickel zinc batteries, and the like. The output voltage of the battery cell corresponding to the basic unit of charge/discharge of these secondary batteries is approximately 2.5 V to 4.2 V.

Recently, as secondary batteries have been applied to devices requiring high output voltage and large charging capacity, such as electric vehicles or energy storage systems (ESSs), a battery pack manufactured by connecting a plurality of battery cells in series or in parallel to form a battery module and then connecting multiple battery modules configured in this way in series or in parallel again is widely used.

However, as disclosed in Korean Registered Patent Publication No. 10-2379227 and Korean Public Patent Publication No. 10-2022-0052183, since the existing technology manufactures a battery pack by accommodating battery cells in a box-shaped metal case to form a battery module and then accommodating such battery modules in a battery pack case again, there are problems of increasing the weight and volume of the entire battery pack and reducing the energy density of the battery pack.

In addition, when the existing cell to pack method of mounting multiple battery cells directly on the pack case of the battery pack is applied to a pouch-type battery cell with a soft case in order to increase energy density of the battery pack, it is difficult to simultaneously handle or stack multiple battery cells, and there is a risk of damage to the battery cells during the process of mounting them on the pack case.

Recently, demand for battery packs applied to electric vehicles has been increasing. Since these battery packs have a plurality of battery cells, safety should be managed more strictly. If thermal runaway, ignition, or explosion occurs in some cells within any one battery module, the generated high-temperature gas, flame, or high-temperature internal material may be ejected and thermally propagated to other adjacent battery modules, thereby causing secondary thermal runaway, secondary fire, or explosion, and thus there is a concern that a chain of thermal runaway, ignition, or explosion may occur in cells within the plurality of battery modules. Therefore, there is a great need for a means capable of suppressing or delaying flame transfer between battery modules when a thermal event such as thermal runaway occurs. However, conventional battery packs may be vulnerable to thermal events. In particular, if a thermal event occurs inside a battery pack, a thermal runaway may occur, resulting in flames and, in severe cases, even explosion, and thus improvement is required.

### DISCLOSURE

### Technical Problem

The present disclosure is designed to solve the problems of the related art, and therefore the present disclosure is directed to providing a battery pack that reduces the overall weight and volume of the battery pack and increases the energy density of the battery pack, and a vehicle including the same.

In addition, the present disclosure is directed to providing a battery pack that facilitates handling and mounting of battery cells in the process of manufacturing a battery pack including multiple battery cells and reduces manufacturing costs by simplifying and lightening the structures required for mounting battery cells while preventing damage to the battery cells, and a vehicle including the same.

Furthermore, the present disclosure is directed to providing a battery pack capable of ensuring excellent safety in the event of a thermal event, and a vehicle including the same.

However, technical problems to be solved by the present disclosure are not limited to the above-described problems, and other problems not mentioned herein may be clearly understood by those skilled in the art from the following description of the present disclosure.

### Technical Solution

A battery pack according to an embodiment of the present disclosure may include a battery assembly including a plurality of cell units; and a pack case accommodating the battery assembly in the internal space, wherein each cell unit may include at least one battery cell and a cell cover at least partially surrounding the outside of the at least one battery cell, wherein a venting space may be provided between the cell cover and the battery cell.

In an embodiment, the at least one battery cell may include a pouch-type battery cell.

In an embodiment, the cell cover may be configured to support the at least one battery cell in an upright state.

The cell cover may partially surround the battery cell so that at least one side of the wrapped battery cell forms an opening exposed toward the pack case.

In an embodiment, the cell cover may be integrally formed.

The cell cover may be configured in a form of bending one plate.

The cell cover may include an insulating coating layer on the inner surface.

The insulating coating layer may be coated, applied, or attached with any one insulating material of silicone resin, polyamide, and rubber.

In an embodiment, the cell cover may be made of a material including stainless steel (SUS).

Moreover, the battery pack of the present disclosure may further include a control module accommodated in the internal space of the pack case and configured to control charge/discharge of the battery cell.

In an embodiment, the cell cover may include a first cover portion covering one side of the at least one battery cell; a second cover portion covering the other side of the at least one battery cell; and a third cover portion connecting the first cover portion and the second cover portion and covering one edge portion of the at least one battery cell.

The venting space may be provided between the battery cell and the third cover portion.

In an embodiment, the at least one battery cell may be adhered and fixed to inner surfaces of the first cover portion and the second cover portion.

An end of the first cover portion that is not connected to the third cover portion and an end of the second cover portion that is not connected to the third cover portion may form an opening where one side of the battery cell is exposed toward the pack case.

In an embodiment, the at least one battery cell may be disposed between the first and second cover portions of the cell cover, but to be spaced apart from the third cover portion to form a predetermined space therebetween.

At this time, a vertical length of the first and second cover portions of the cell cover may be longer than a vertical length of the at least one battery cell.

In an embodiment, the battery pack may include a heat sink cooling the cell unit in thermal contact with the cell unit.

In particular, the cell cover may be in contact with the heat sink.

In an embodiment, both ends of the cell cover may extend toward the heat sink, but longer than the end of the at least one battery cell disposed between the first cover portion and the second cover portion to form a predetermined space between the at least one battery cell and the heat sink.

In an embodiment, the heat sink may have a fixing groove into which both ends of the cell cover are inserted and fixed.

In the present disclosure, the first cover portion and the second cover portion may further include lower beading portions formed at ends adjacent to the opening and recessed inward toward the battery cell.

Here, the lower beading portion may be configured to be continuous along the longitudinal direction of the cell cover.

And, the lower beading portion of the first cover portion and the lower beading portion of the second cover portion may be arranged symmetrically with respect to the center of the cell cover.

Moreover, the first cover portion and the second cover portion may further include upper beading portions recessed inward toward the battery cell between the third cover portion and the battery cell.

The upper beading portion may be configured to be continuous along the longitudinal direction of the cell cover.

The upper beading portion of the first cover portion and the upper beading portion of the second cover portion may be arranged symmetrically with respect to the center of the cell cover.

According to another embodiment, the first cover portion and the second cover portion include both the upper beading portion and the lower beading portion.

A vehicle according to another embodiment of the present disclosure may include at least one battery pack according to any one of the embodiments described above.

### Advantageous Effects

The battery pack of the present disclosure is a CTP concept, and a module case or the like is eliminated, which may improve cooling performance and energy density.

According to the present disclosure, a plurality of battery cells are not accommodated in a separate module case to be mounted on the pack case of the battery pack, but are only partially covered by a cell cover with a simplified structure and are directly mounted on the pack case, thereby preventing damage to battery cells caused by the process of directly mounting and using the plurality of battery cells in the case, and facilitating swelling control of the battery cells and the design of gas venting paths while reducing the weight and volume of the entire battery pack and increasing the energy density of the battery pack.

In addition, battery cells are adhered and fixed to the inner surface of the cell cover, and spaces for heat exchange and gas venting are formed above and below the battery cells, thereby enabling efficient cooling and directional venting of the battery cells, and when a cell with improved safety, such as an LFP pouch cell, is applied, thermal resins may be omitted, thereby reducing manufacturing costs.

In addition, the cell cover is fixed by being inserted into the fixing groove of the heat sink and serves as a cooling fin that transfers heat of the battery cell to the heat sink, thereby further improving the cooling performance of the battery cell while simplifying and streamlining the battery pack manufacturing process.

In addition, cell units, each including at least one battery cell, are blocked and fixed to a pair of side plates and an integrated end cover, thereby simplifying and lightening the structures required for battery cell mounting and reducing manufacturing costs while facilitating the handling and mounting of the battery cells mounted on the battery pack.

In addition, according to another aspect of the present disclosure, the assembly process between the cell cover and the battery cell may be improved through the beading portion of the cell cover, and an air layer may be formed between the cell units, thereby reducing the heat transfer rate between the cell units.

In addition, it is also effective in minimizing the amount of swelling of battery cells by compressing the battery cells through elastic deformation of the beading portion of the cell cover during swelling of the battery cells.

### DESCRIPTION OF DRAWINGS

FIG. 1 is a view showing a battery pack according to an embodiment of the present disclosure.
FIG. 2 is a view showing a battery assembly that may be included in a battery pack according to an embodiment of the present disclosure.
FIG. 3 is a partially exploded perspective view showing the battery assembly shown in FIG. 2.
FIG. 4 is an enlarged view of a bottom portion of the P1 region shown in FIG. 2.
FIG. 5 is a perspective view showing a cell unit that may be included in the battery assembly shown in FIG. 2.
FIG. 6 is an exploded perspective view showing the cell unit shown in FIG. 5.
FIG. 7 is a perspective view showing a cell cover of the cell unit shown in FIG. 6.
FIGS. 8 and 9 are views showing a mounting method for the cell unit adopting the cell cover shown in FIG. 7.
FIG. 10 is a perspective view schematically showing the main configuration of a battery pack according to another embodiment of the present disclosure.
FIG. 11 is a perspective view schematically showing the configuration of a cell unit according to another embodiment of the present disclosure.
FIG. 12 is a schematic cross-sectional view of a cell unit according to another embodiment of the present disclosure.
FIG. 13 is a schematic cross-sectional view of a portion of a battery pack according to another embodiment of the present disclosure.
FIG. 14 is a view corresponding to FIG. 12 and illustrates another embodiment of the cell unit of FIG. 12.
FIG. 15 is a view corresponding to FIG. 12 and illustrates still another embodiment of the cell unit of FIG. 12.
FIG. 16 is a view showing a vehicle according to an embodiment of the present disclosure.

### BEST MODE

Hereinafter, embodiments according to the present disclosure will be described in detail with reference to the accompanying drawings in order to clarify solutions corresponding to the technical problems of the present disclosure. However, if the description of related known technology rather obscures the gist of the present disclosure in describing the present disclosure, the description thereof may be omitted. In addition, the terms used in this specification are terms defined in consideration of functions in the present disclosure, which may vary depending on the intention or custom of the designer, manufacturer, and the like. Therefore, definitions of terms to be described below should be made based on the content throughout this specification.

It should be noted that in this specification, terms indicating direction are terms based on the components shown in the attached drawings, and are relative terms that may change depending on the posture or position of the actual components.

In the drawings, the size of each component or a specific portion constituting the component is exaggerated, omitted, or schematically illustrated for convenience and clarity of description. Therefore, the size of each component does not fully reflect the actual size.

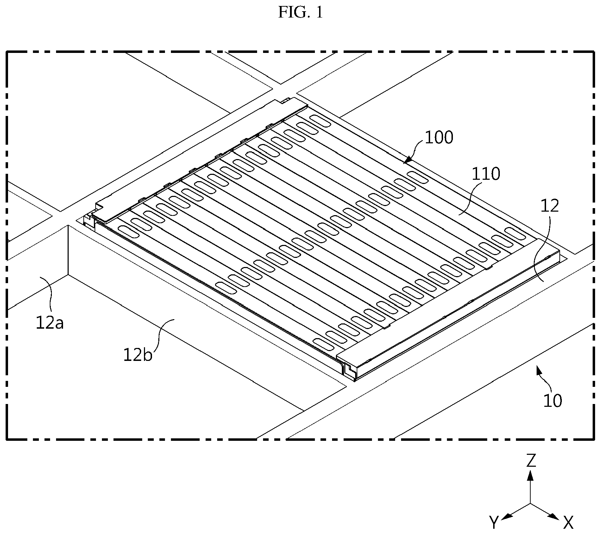

FIG. 1 is a view showing a battery pack according to an embodiment of the present disclosure.

As shown in FIG. 1, the battery pack 10 may include at least one battery assembly 100 and a pack case 12.

The battery assembly 100 may include a plurality of cell units 110. The cell units 110 may be arranged in plurality, for example, along the Y-axis direction. The battery assembly 100 including these cell units 110 may be arranged in plurality along the X-axis and Y-axis directions within the pack case 12.

The pack case 12 accommodates the battery assembly 100 in an internal space. The pack case 12 has a seating structure in which the battery assembly 100 is directly seated without a separate case, and may be configured to accommodate a plurality of battery assemblies 100 in separate seating spaces for each battery assembly. To this end, the pack case 12 may include cross beams 12a, 12b that divide the internal space into a plurality of seating spaces. These cross beams 12a, 12b may be disposed to be spaced apart from each other or to intersect to form the plurality of seating spaces.

The pack case 12 may be made of a plastic or metal material. In addition, the pack case 12 may adopt exterior materials of various battery packs known at the time of filing the present disclosure.

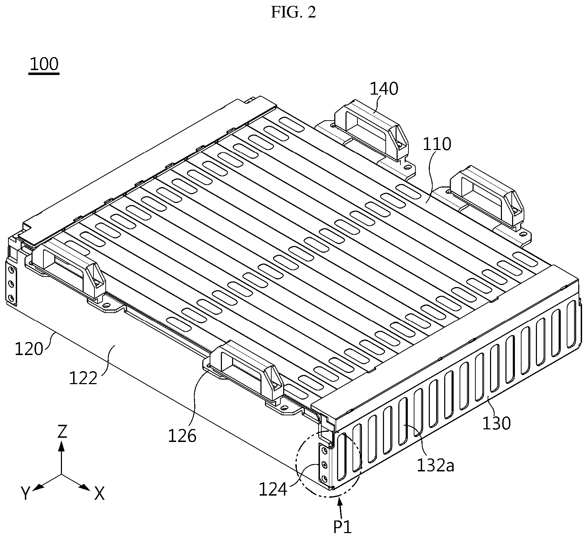

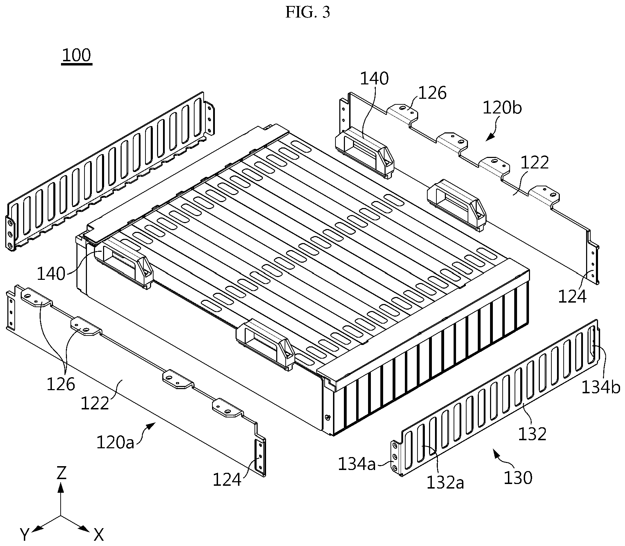

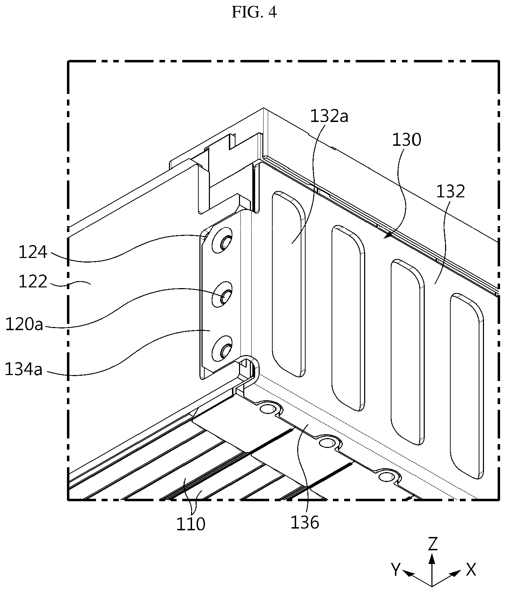

FIG. 2 is a view showing a battery assembly that may be included in a battery pack according to an embodiment of the present disclosure. FIG. 3 is a partially exploded perspective view showing the battery assembly shown in FIG. 2. FIG. 4 is an enlarged view of a bottom portion of the P1 region shown in FIG. 2.

Referring to FIGS. 2 to 4, the battery assembly 100 includes a plurality of cell units 110, a pair of side plates 120, and a pair of integrated end covers 130, and may further include a handle unit 140 depending on the embodiment.

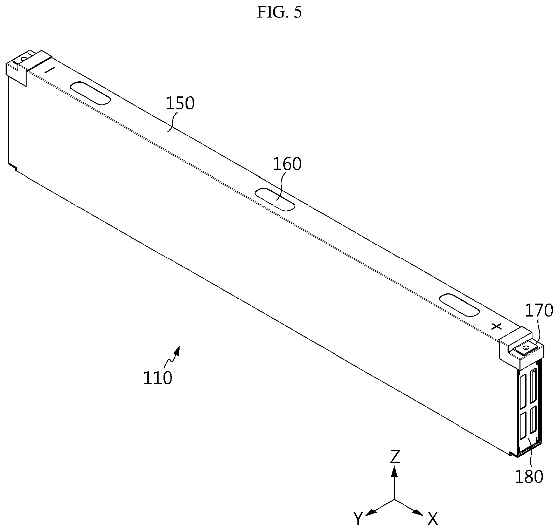

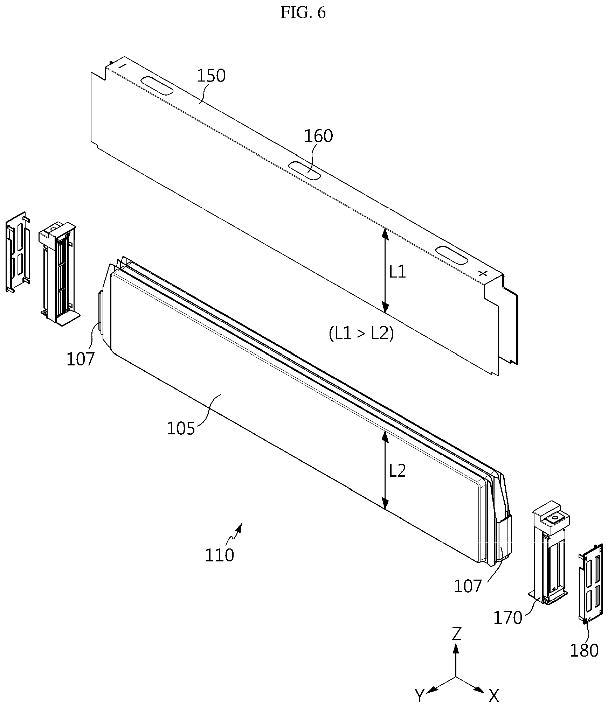

FIG. 5 is a perspective view showing a cell unit that may be included in the battery assembly shown in FIG. 2. FIG. 6 is an exploded perspective view showing the cell unit shown in FIG. 5.

Referring to FIGS. 5 and 6, the cell unit 110 may each include at least one battery cell 105 and a cell cover 150 at least partially surrounding the outside of the battery cell 105. In addition to at least one battery cell 105 and a cell cover 150, the cell unit 110 may include a busbar frame 170 and an insulating cover 180.

In an embodiment of the present disclosure, the battery cell 105 is a pouch-type battery cell. The battery cell 105 becomes a basic unit of charging and discharging, and the cell cover 150 may only partially cover and support at least one battery cell 105. In addition, a venting space is provided between the cell cover 150 and the battery cell 105, which will be described in detail later.

The battery cell 105, which corresponds to a basic unit of charge/discharge, may be manufactured by accommodating an electrode assembly and an electrolyte inside a pouch exterior material made of a laminated film containing a soft metal and then sealing the pouch exterior material. In this case, the electrode assembly may be manufactured by interposing a separator between the negative electrode and the positive electrode. In addition, an electrode lead 107 electrically connected to the electrode assembly may be provided to be exposed to the outside of the pouch exterior material of the battery cell 105. The electrode lead 107 includes a positive electrode lead and a negative electrode lead as a pair. Here, the positive electrode lead and the negative electrode lead may be provided at both front and rear ends in the longitudinal direction of the battery cell 105.

The battery cell 105 may have four edge portions, such as an upper edge portion, a lower edge portion, a front edge portion, and a rear edge portion, and all four edge portions may be sealing portions, or only the lower edge portion may be a folded portion of the pouch exterior material and an unsealed portion. For example, the upper edge portion may be a so-called double side folding (DSF) portion that is folded twice as a sealing portion of the battery cell 105, and the lower edge portion may be an unsealed portion.

The cell cover 150 may include a venting hole 160 provided at various positions depending on the intended venting direction. This venting hole 160 may be provided by forming a notch in a predetermined part of the cell cover 150.

According to the battery pack 10 including the cell cover 150, a plurality of battery cells 105 may be stably accommodated inside the pack case 12 without the configuration of a stacking frame such as a plastic cartridge or a separate module case.

The busbar frame 170 supports the electrode lead 107 of at least one battery cell 105 covered by the cell cover 150, and may be configured to electrically connect this electrode lead 107 to an electrode lead 107 of another battery cell 105. In this case, the busbar frame 170 may have a terminal electrically connected to the electrode lead 107.

The insulating cover 180 may be configured to prevent a short circuit of the electrode lead 107 or the busbar. To this end, the insulating cover 180 may be made of a polymer synthetic resin having insulating properties.

Referring to FIGS. 2 to 6 together, a plurality of such cell units 110 may be configured to be stacked side by side in the width direction (Y-axis direction in the drawing). The pair of side plates 120 may be disposed at both ends of the plurality of cell units 110 in the width direction (stacking direction), respectively, and may be configured to support the plurality of cell units 110. To this end, at least one of the pair of side plates 120 may include a support portion 122, an end cover coupling portion 124, and a handle coupling portion 126.

The support portion 122 may be configured to support the plurality of cell units 110 by contacting one side or the other side of the plurality of cell units 110 in the width direction. In this case, the support portion 122 may be configured as a plate structure.

The end cover coupling portion 124 may be configured to extend from the support portion 122 in the side direction (X-axis direction in the drawing) to be coupled to one end of the integrated end cover 130 in the side direction.

The handle coupling portion 126 may be configured to extend upward (Z-axis direction in the drawing) from the support portion 122 to be coupled to at least one handle unit 140 among the plurality of handle units 140. As will be described again below, the handle coupling portion 126 may be configured to be capable of being coupled to and separated from at least one handle unit 140.

This pair of side plates 120 may evenly distribute the pressure applied to the plurality of cell units 110 throughout the cell unit 110 while blocking or grouping the plurality of cell units 110 together with the integrated end cover 130. In addition, the pair of side plates 120 may be made of a metal material containing aluminum or a material that combines aluminum and a polymer synthetic resin through insert molding.

A pair of integrated end covers 130 may be disposed at both ends of the plurality of cell units 110 in the longitudinal direction (X-axis direction in the drawing), respectively, to support the plurality of cell units 110, and may be configured to integrally cover the terminal parts of the battery cells 105 included in the plurality of cell units 110.

That is, one end of each integrated end cover 130 in the side direction may be coupled to a first side plate, which is one of the pair of side plates 120, and the other end thereof in the side direction may be coupled to a second side plate, which is the other of the pair of side plates 120, thereby being configured to integrally cover terminal parts of the battery cells 105 included in the plurality of cell units 110. In this case, the integrated end cover 130 may have vent holes 132a at positions corresponding to each of the plurality of cell units 110. This integrated end cover 130 may be made of a metal material containing aluminum or a polymer synthetic resin, or may be made of a material that combines a metal material containing aluminum and a polymer synthetic resin through insert molding.

By having this integrated end cover 130, the battery assembly 100 may omit individual end covers that are applied to each cell unit 110 to cover the terminal or busbar part of the battery cell 105 included in the corresponding cell unit 110, and the manufacturing process may be simplified.

The handle unit 140 may be configured to be held by a carrier carrying the battery assembly 100 or to be connected to a predetermined transfer device that lifts or transfers the battery assembly 100.

This handle unit 140 may be configured to be detachably coupled to the pair of side plates 120. In addition, the handle unit 140 may be made of a metal material having a predetermined strength, a polymer synthetic resin, or a combination thereof.

The scale of the battery assembly 100 described above may be expanded by increasing the number of cell units 110 to be stacked.

As shown in detail in FIG. 3, a pair of side plates 120 and a pair of integrated end covers 130 of the battery assembly 100 may be coupled to each other to block or group a plurality of cell units 110. To this end, the integrated end cover 130 may include a terminal cover portion 132, a first coupling portion 134a, and a second coupling portion 134b.

The terminal cover portion 132 may be configured to integrally cover terminal parts (electrode lead parts) of the battery cells 105 included in the plurality of cell units 110. This terminal cover portion 132 may have a vent hole 132a at each position corresponding to each cell unit 110.

The first coupling portion 134a may be configured to extend from the terminal cover portion 132 toward the first side plate 120a to be coupled to the end cover coupling portion 124 of the first side plate 120a. In this case, the first coupling portion 134a and the end cover coupling portion 124 may be coupled by a fastening member such as a bolt or a rivet.

The second coupling portion 134b may be configured to extend from the terminal cover portion 132 toward the second side plate 120b to be coupled to the end cover coupling portion 124 of the second side plate 120b. In this case, the second coupling portion 134b and the end cover coupling portion 124 may be coupled by a fastening member such as a bolt or a rivet.

Meanwhile, the handle unit 140 may be coupled to the handle coupling portion 126 of the corresponding side plate 120 in various ways that can be coupled and separated.

As shown in FIG. 4, the first coupling portion 134a of the integrated end cover 130 may be coupled to the end cover coupling portion 124 of the first side plate 120a through the fastening member B.

In addition, the integrated end cover 130 may include a cell unit support portion 136. The cell unit support portion 136 may be configured to extend from the terminal cover portion 132 provided with the venting hole 132a to the bottom of the plurality of cell units 110 to support the plurality of cell units 110. In this case, the cell unit support portion 136 may be configured to support lower ends of the busbar frames 170 provided in the plurality of cell units 110.

In this way, the cell units 110, each of which includes at least one battery cell 105, may be blocked and fixed to the pair of side plates 120 and the integrated end cover 130, thereby while facilitating handling and mounting of the battery cells 105 mounted on the battery pack 10, simplifying and lightening the structures required for mounting the battery cells 105, and reducing manufacturing costs.

According to the battery pack 10 described above, a configuration in which a plurality of battery cells 105 are stacked side by side in the horizontal direction in a vertically upright state may be easily implemented by an embodiment including the cell cover 150.

Moreover, according to an embodiment of the present disclosure, the battery cells 105 are directly accommodated in the pack case 12 without being modularized, and thus a battery pack 10 that does not require a module case for the battery module may be manufactured. Accordingly, by reducing the space occupied by the module case, more and more battery cells 105 may be disposed inside the pack case 12. Therefore, there is an effect of further improving the energy density of the battery pack 10. In particular, the battery cells 105 having a soft case, such as pouch-type battery cells, may be directly assembled to the pack case 12 of the battery pack 10, thereby maximizing space utilization of the battery pack 10 and significantly improving energy capacity.

In addition, by surrounding the battery cells 105 with the cell cover 150, the battery cells 105 may be easily made into a solid form, so that a configuration in which they are directly stacked inside the pack case 12 may be more easily implemented. Accordingly, assemblability and mechanical stability of the battery pack 10 may be improved.

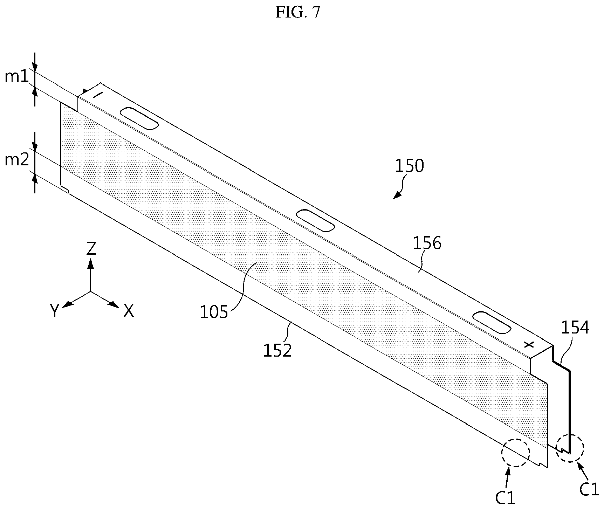

FIG. 7 is a perspective view showing a cell cover of the cell unit shown in FIG. 6. Hereinafter, the cell unit 110 and the cell cover 150 will be described in more detail with reference to FIGS. 5 to 7.

As described with reference to FIGS. 5 and 6, the cell unit 110 may include a cell cover 150 that partially covers the outside of at least one battery cell 105.

The cell cover 150 may be configured to partially surround the outside of at least one battery cell 105. That is, the cell cover 150 may be configured to surround at least some of the battery cells 105 among the plurality of battery cells 105 included in the battery pack 10. Moreover, the cell cover 150 may be provided to at least partially surround the battery cell 105. In addition, the cell cover 150 may be configured to support at least one battery cell 105 in an upright state.

For example, as shown in FIG. 6, the cell cover 150 may be configured to partially surround the outside of three battery cells 105 and support the battery cells 105 in an upright state.

As shown in FIG. 6, each battery cell 105 has two wide surfaces, and if the battery cell 105 is a pouch-type battery cell, the edge portions of these wide surfaces may have a sealing portion or a folded portion of the pouch exterior material. Therefore, it is generally difficult to stack pouch-type battery cells in a vertically upright form with a narrow surface facing down. However, in the battery pack 10 according to the present disclosure, the cell cover 150 may be configured to support the upright state, that is, the standing state, of the wrapped battery cells 105 while surrounding one or more battery cells 105.

To this end, as shown in detail in FIG. 7, the cell cover 150 may include a first cover portion 152 covering one side of at least one battery cell 105, a second cover portion 154 covering the other side of at least one battery cell 105, and a third cover portion 156 connecting the first cover portion 152 and the second cover portion 154 and covering an upper edge portion of at least one battery cell 105. In this case, the venting hole 160 may be provided in the third cover portion 156 of the cell cover 150.

For example, the cell cover 150 may be configured in a ' 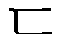 ' shape, 'u' shape, or 'n' shape that surrounds three sides of at least one battery cell 105. The cell cover 150 may be configured such that a plurality of battery cells 105 may be stacked in the horizontal direction in a vertically upright state. For example, as in the embodiment of the battery pack 10 described above, the plurality of cell units 110 are stacked on each other in the horizontal direction (Y-axis direction), and each cell cover 150 may be configured to surround one or more battery cells 105. In this case, the configuration in which the plurality of battery cells 105 are stacked side by side in the horizontal direction while each is upright may be stably maintained by the cell cover 150.

In addition, the cell cover 150 surrounds three sides of at least one battery cell 105, and thus a configuration in which the busbar or terminal of each unit is positioned on the side that is not wrapped by each cell cover 150 for each cell unit 110 may be easily implemented.

The battery cell 105, such as a pouch-type battery cell, may also be said to be formed in an approximately hexahedral shape. And, electrode leads 107, that is, a negative electrode lead and a positive electrode lead, may be formed on two of the six sides, respectively. And, the cell cover 150 is provided to surround at least a portion of three of the remaining four sides of the six-sided battery cell 105 except for the two sides thereof on which the electrode leads 107 are formed.

According to this embodiment of the present disclosure, it is possible to induce the discharge direction of flames or the like to the exposed side (a portion where the electrode lead 107 is formed) of the cell cover 150. For example, according to the above embodiment, the front and rear sides of the cell cover 150 where the electrode lead 107 is located are open, so that flames or the like may be discharged in these open directions. In particular, when the cell cover 150 is configured with the front and rear sides open as described above, side directional venting along the longitudinal direction of the battery cell 105 may be easily implemented. Alternatively, when the bottom or top of the cell cover 150 is configured in an open form, directional venting may be made toward the open side (open end) of the bottom or top of the cell cover 150.

In a pouch-type battery cell, the upper edge portion, which is a sealing portion, may be more vulnerable to the discharge of relatively high-temperature gas or flame than the lower edge portion, which is an unsealed portion. However, according to the above embodiment, the upper edge portion, which is the sealing portion, may be disposed to face the cell cover 150, thereby being more advantageous for directional venting.

In the illustrated example, the third cover portion 156 may be configured to surround the top of the upper edge portion of the battery cell 105 accommodated therein.

The first cover portion 152 may be configured to extend downward from one end of the third cover portion 156. For example, the first cover portion 152 may be configured to extend long downward from the left end of the third cover portion 156. The first cover portion 152 may be configured to surround the wide surface of the battery cell 105 accommodated therein.

The second cover portion 154 may be positioned to be spaced apart from the first cover portion 152 in the horizontal direction. And, the second cover portion 154 may be configured to extend downward from the other end of the third cover portion 156. For example, the second cover portion 154 may be configured to extend long downward from the right end of the third cover portion 156. And, the second cover portion 154 may be configured to surround the wide surface of the battery cell 105 accommodated therein. In the above embodiment, the internal space may be limited by the third cover portion 156, the first cover portion 152, and the second cover portion 154. And, the cell cover 150 may accommodate one or more battery cells 105 in this limited internal space.

In the illustrated example, the cell cover 150 partially surrounds the battery cell 105 so that at least one side, particularly the lower side, of the wrapped battery cell 105 forms an opening exposed toward the pack case 12. As such, according to one aspect of the present disclosure, the cooling efficiency of the battery pack 10 may be further improved. In particular, in the case of an embodiment of the present disclosure, a portion of each battery cell 105 may be directly exposed to the pack case 12, so that heat from each battery cell 105 may be effectively discharged to the outside through the pack case 12.

According to this embodiment of the present disclosure, a configuration for supporting and protecting one or more battery cells 105 with one cell cover 150 may be easily implemented. In particular, according to the above embodiment, the lower edge portion of the battery cell 105 may be located adjacent to the open end of the cell cover 150 to face the pack case 12 without being surrounded by the cell cover 150, and may be in direct face-to-face contact with the pack case 12. Therefore, heat from the battery cell 105 surrounded by the cell cover 150 may be quickly and smoothly discharged toward the pack case 12 below. Accordingly, the cooling performance of the battery pack 10 may be secured more effectively.

In particular, such a configuration may be implemented more effectively when cooling is mainly performed in the lower portion of the pack case 12. For example, in the case of a battery pack mounted on an electric vehicle, cooling may be mainly performed in the lower portion of the pack case 12 as it is mounted on the lower portion of the vehicle body. At this time, as in the above embodiment, when the lower edge portion of each battery cell 105 is in face-to-face contact with the pack case 12, heat is quickly transferred from each battery cell 105 to the pack case 12, and thus cooling performance may be further improved.

In addition, according to the above embodiment, when high-temperature gas or flame is discharged from the battery cell 105 in a situation such as thermal runaway, it is possible to effectively prevent the discharged gas or flame from heading toward the upper side. In particular, when a passenger is located on the upper side of the battery pack 10, such as in an electric vehicle, it is possible to suppress or delay gas or flame from heading toward the passenger according to the above embodiment.

The cell cover 150 may be integrally formed. In this case, the cell cover 150 may be configured by bending a metal plate with a plate structure. That is, the cell cover 150 may be formed in a shape where one plate is bent.

The cell cover 150 may be configured to surround one or more battery cells 105 by bending both ends of one plate in the same direction. In particular, when a first cover portion 152, a second cover portion 154, and a third cover portion 156 are provided in one cell cover 150, the first cover portion 152, the second cover portion 154, and the third cover portion 156 may be formed of one plate. In this case, it can be said that several components of the cell cover 150 are integrally manufactured.

Here, each component may be distinguished through a bent portion. In particular, two bent portions may be formed in one plate. And, based on these two bent portions, the first cover portion 152, the second cover portion 154, and the third cover portion 156 may be distinguished. In particular, the central portion of one plate may form the third cover portion 156, and both sides may be bent or folded in a downward direction around the third cover portion 156, thereby forming the first cover portion 152 and the second cover portion 154. In this way, the configuration of forming a bent portion in one plate to form the cell cover 150 may be implemented in various ways, such as pressing or roll forming.

According to this embodiment of the present disclosure, manufacturing of the cell cover 150 may be simplified. In addition, the cell cover 150 with a simplified structure is made of a metal material having higher rigidity than the case of the battery cell 105, such as the pouch exterior material, so that at least one battery cell 105 covered by the cell cover 150 may be protected from external impact or vibration. In addition, in this case, heat conduction performance through the cell cover 150 is further enhanced, which may further improve cooling performance.

For example, the cell cover 150 may be made of a material containing stainless steel (SUS) that is easy to process and has high corrosion resistance. The cell cover 150 may be made of various materials other than SUS to ensure rigidity. In particular, the cell cover 150 may be made of a metal material. For example, it may be made of a chromium (CR)-based metal material. In the case of such a metal material, the stacked state of the battery cells 105 may be more stably maintained and the battery cells 105 may be more safely protected from external impact. In addition, as an example, when the cell cover 150 is made of a steel material such as SUS, the overall structure may be stably maintained in the event of occurrence of a flame from the battery cell 105 due to its high melting point. In particular, since a steel material has a higher melting point than an aluminum material, it may not be melted even with flame ejected from the battery cell 105, and its shape may be stably maintained. Therefore, the effect of preventing or delaying flame propagation between the battery cells 105, the venting control effect, and the like may be excellently secured.

The cell cover 150 may include an insulating coating layer on an inner surface thereof. The insulating coating layer may be coated, applied, or attached with any one of silicone resin, polyamide, and rubber. According to the configuration of the insulating coating layer of the cell cover 150 according to this embodiment, the insulating coating effect may be maximized with a minimum amount of coating. In addition, since the insulating coating layer is applied to the inner surface of the cell cover 150, the insulation between the battery cell 105 and the cell cover 150 may be strengthened.

Meanwhile, although not shown in FIGS. 5 and 6, the cell unit 110 may further include a clamping member configured to clamp the cell cover 150. The clamping member may be configured to clamp the cell cover 150 into which at least one battery cell 105 is inserted to prevent the gap between both ends of the cell cover 150 (the end of the first cover portion 152 and the end of the second cover portion 154) from being widened or the inserted battery cell 105 from being separated from the cell cover 150.

This clamping member may be made of a tape or a metal material having elasticity. In particular, the tape may include a base layer and an adhesive layer formed on the surface of the base layer.

The clamping member may be located on the outside of the battery cell 105 that is not surrounded by the cell cover 150. For example, the cell cover 150 may be configured to expose the lower end of the battery cell 105 to the outside without surrounding it. In this case, the clamping member may be attached to the lower end of the cell cover 150 that is exposed to the outside without surrounding the battery cell 105.

The clamping member may be included in plurality in one cell unit 110. For example, in order to couple the end of the first cover portion 152 and the end of the second cover portion 154, three clamping members may be disposed to be spaced apart in the front-rear direction (X-axis direction in the drawing). Here, the front-rear direction can be said to be a horizontal direction orthogonal to the stacking direction of the battery cells 105.

According to the above embodiment, the end of the cell cover 150 may be prevented from being widened in one cell unit 110. Therefore, the accommodation state of the cell cover 150 and the battery cell 105 inside the pack case 12 may be stably maintained. In particular, according to the above embodiment, the self-supporting configuration of the cell cover 150 may be stably maintained.

Meanwhile, FIG. 6 shows that the number of battery cells 105 covered by one cell cover 150 is three, but depending on the scale of the cell cover 150, the number of battery cells 105 covered by the cell cover 150 may be changed in various ways, such as fewer than three, for example one, or more than three, for example five. A configuration that changes the number of battery cells 105 surrounded by the cell cover 150 may be easily implemented. In particular, according to an embodiment of the present disclosure, the number of unit cells accommodated by the cell cover 150 may be easily changed by changing the width of the cell cover 150 (width along the Y-axis direction of the third cover portion 156). Therefore, in this case, changes in capacity or output by one cell cover 150 may be easily made.

Looking at the cell cover 150 in more detail, the cell cover 150 may cover and support at least one battery cell 105. To this end, the cell cover 150 may include a first cover portion 152, a second cover portion 154, and a third cover portion 156.

When the cell cover 150 covers one battery cell 105, the first cover portion 152 may cover one side of the battery cell 105. The second cover portion 154 may cover the other side of the battery cell 105. The third cover portion 156 connects the first cover portion 152 and the second cover portion 154 and may cover the upper edge portion of the battery cell 105.

When the cell cover 150 covers two or more battery cells 105, the first cover portion 152 may cover one side of the left outermost battery cell 105 among the two or more battery cells 105. The second cover portion 154 may cover the other side of the right outermost battery cell 105 among the two or more battery cells 105. The third cover portion 156 connects the first cover portion 152 and the second cover portion 154 and may cover the upper edge portion of the two or more battery cells 105.

As shown in FIG. 6, the vertical length L1 of the first and second cover portions 152, 154 of the cell cover 150 may be longer than the vertical length L2 of the battery cell 105. The area of the first and second cover portions 152, 154 is provided to be larger than that of the battery cell 105, so that the protection effect and safety of the battery cell 105 may be secured to the maximum. The vertical lengths L1 of the first and second cover portions 152, 154 may be equal to each other. In this case, the self-supporting configuration of the cell cover 150 may be more easily achieved.

In particular, as shown in FIG. 7, the cell cover 150 may be configured such that the height of both sides is higher than the height of the battery cell 105 by m1 or by m1 + m2.

First, at least one battery cell 105 may be disposed between the first and second cover portions 152, 154 of the cell cover 150, but to be spaced apart from the third cover portion 156 by m1 so that a predetermined space is formed between the battery cell 105 and the third cover portion 156. This predetermined space becomes the above-mentioned venting space. That is, a venting space may be provided between the battery cell 105 and the third cover portion 156.

While the pouch-type battery cell has the advantage of being able to implement a secondary battery of the same capacity with a smaller volume and mass on account of its being lightweight, less prone to electrolyte leakage, and flexible in shape, it has a task of ensuring safety due to a risk of explosion in case of overheating, which is one of the important tasks. Overheating of the pouch-type battery cell occurs due to various reasons, one of which may be a case where an overcharge exceeding a limit flows through the pouch-type battery cell. When an overcharge is applied, the pouch-type battery cell generates heat by Joule heat, and thus the internal temperature of the battery cell rapidly increases. A rapid rise in temperature may cause a decomposition reaction of the electrolyte to generate gas. This resulting increase in pressure inside the pouch exterior material may cause a swelling phenomenon, a type of bulging phenomenon, which may lead to serious problems such as explosion of the secondary battery. When gas is generated inside the pouch-type battery cell due to exposure to high temperature, external impact, and the like, as well as such overcharge, it is necessary to effectively discharge the gas to ensure the safety of the secondary battery. Discharging gas generated inside the secondary battery to the outside is called venting. The cell cover 150 included in the battery pack 10 according to an embodiment of the present disclosure may be configured to allow venting gas to be discharged into the separation space between the battery cell 105 and the third cover portion 156, thereby ensuring the safety of the secondary battery.

In this case, at least one battery cell 105 may be adhered and fixed to the inner surfaces of the first cover portion 152 and the second cover portion 154. The member for adhesion may be thermally conductive. Through this adhesion, the cell cover 150 is firmly coupled to the battery cell 105 and may help discharge heat generated in the battery cell 105 to the outside of the battery cell 105. In addition, the distance between the battery cell 105 and the third cover portion 156 may be maintained, thereby maintaining the venting space.

In addition, the first cover portion 152 and the second cover portion 154 of the cell cover 150 may extend downward by m2 longer than the at least one battery cell 105 disposed between them.

An end C1 of the first cover portion 152 that is not connected to the third cover portion 156 and an end C1 of the second cover portion 154 that is not connected to the third cover portion 156 forms an opening where the lower side of the battery cell 105 is exposed toward the pack case 12.

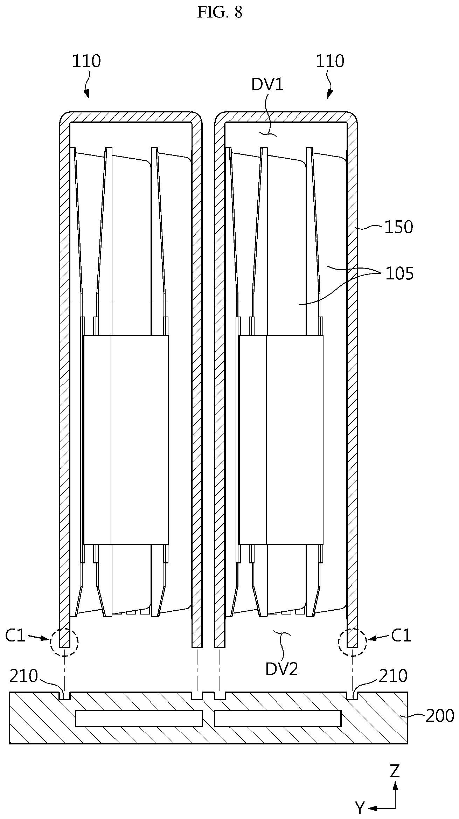

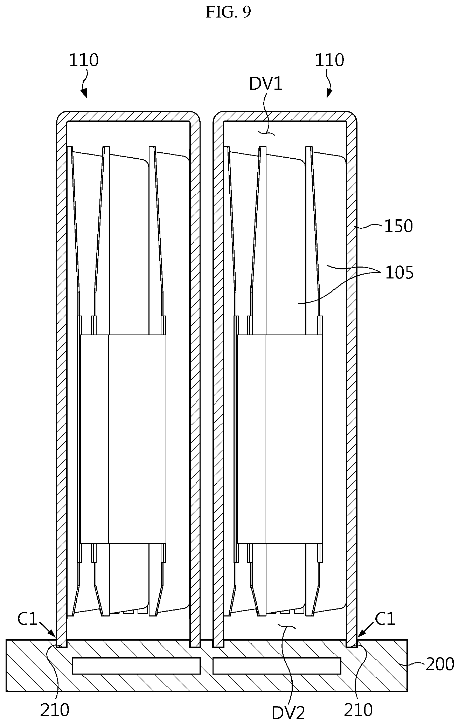

FIGS. 8 and 9 show a mounting method for the cell unit 110 including the cell cover 150 shown in FIG. 7.

As shown in FIG. 8, the battery pack 10 may further include a heat sink 200 that cools the cell unit 110 by thermal contact with the cell unit 110. Here, the heat sink 200 refers to an object that absorbs and dissipates heat from another object through direct or indirect thermal contact. This heat sink 200 may be disposed on the bottom of the pack case 12 shown in FIG. 1.

In the mounted state, in particular, the cell cover 150 may be in contact with the heat sink 200. In this case, the cell cover 150 may serve as a cooling fin that transfers heat of the battery cell 105 to the heat sink 200, thereby simplifying and streamlining the battery pack manufacturing process and further improving the cooling performance of the battery cell 105.

In addition, the heat sink 200 may have a fixing groove 210 into which both ends of the cell cover 150 (the end C1 of the first cover portion 152 and end C1 of the second cover portion 154) are inserted and fixed. The fixing groove 210 may have a slit shape corresponding to the end shape of the cell cover 150. The fixing groove 210 may be formed at the top of the heat sink 200 in a position and shape corresponding to the end of the cell cover 150. One or more ends of the cell cover 150 may be fitted into one fixing groove 210. According to this embodiment of the present disclosure, the coupling between the cell cover 150 and the heat sink 200 may be further improved. Therefore, even in situations such as vibration or impact applied to the battery pack 10 or swelling of the battery cell 105, the stacked state of the cell cover 150 and the battery cell 105 accommodated therein may be maintained stably. Moreover, according to the above embodiment, it is possible to effectively prevent the cell cover 150 from moving in the left-right direction (Y-axis direction). In addition, according to the above embodiment, the assembly position of the cell cover 150 may be guided through a fitting configuration between the cell cover 150 and the heat sink 200. Therefore, in this case, the assembability of the battery pack 10 may be further improved.

Both ends of the cell cover 150 may extend toward the heat sink 200. In addition, both ends of the cell cover 150 may extend longer toward the heat sink 200 than the end of the corresponding battery cell 105 so that an additional venting space DV2 for directional venting is formed between at least one battery cell 105 disposed between the first cover portion 152 and the second cover portion 154 and the heat sink 200.

Next, as shown in FIG. 9, the cell unit 110 may be fixed in such a way that both ends of the cell cover 150 are inserted into the fixing grooves 210 of the heat sink 200. In this way, the cell cover 150 may be configured such that at least one end thereof is fitted into the heat sink 200. Specifically, the lower end of the cell cover 150 may be fastened and fixed by being fitted into the fixing groove 210. As a result, venting spaces DV1, DV2 capable of heat exchange and gas venting are formed above and below the battery cells 105, respectively, thereby enabling efficient cooling and directional venting of the battery cells 105.

In addition, the cell cover 150 may be included in plurality in the battery pack 10. When a plurality of cell covers 150 are included, the plurality of cell covers 150 may be spaced apart from each other as shown in FIG. 9. For example, the plurality of cell covers 150 may be spaced apart in the Y-axis direction. Direct heat transfer between the cell covers 150 may be blocked through the spaced apart space. In addition, separate members required to configure the battery pack 10 may be inserted through the spaced apart space. Alternatively, an insulating pad or a flame suppression pad may also be interposed in at least a portion between the plurality of cell covers 150. Such an insulating pad or a flame suppression pad may prevent heat or flame that may be generated within any one cell cover 150 from being transferred to another cell cover 150 and affecting the other battery cells 105. The flame suppression pad may be formed of a heat-resistant resin such as vinyl chloride resin, a material such as silicon or ceramic, a composite of a heat-resistant resin and a ceramic or glass filler, or a metal plate coated with insulation, but this is exemplary and any flame-retardant material is sufficient. It is preferable that the flame suppression is made of a material that does not decompose, melt, or ignite at least up to the temperature at which thermal runaway of the battery cell 105 is generated (e.g., 150°C to 200°C).

In addition, when a plurality of cell covers 150 are stacked and included in the battery pack 10, an adhesive member may be interposed between the cell covers 150. For example, an adhesive member may be interposed in a portion where the two cell covers 150 face each other to adhesively fix them. Through this adhesive configuration, the connection configuration between multiple cell covers 150 may be made more robust.

Between the battery cell 105 and the cell cover 150, the above-mentioned venting space DV1, which is formed as a separation space between the battery cell 105 and the cell cover 150, is provided. In addition, between the battery cell 105 and the heat sink 200, an additional venting space DV2, which is formed as a separation space between the battery cell 105 and the heat sink 200, is also provided. According to one aspect of the present disclosure, it is possible to effectively respond to the thermal event in the event of a thermal runaway in a specific battery cell. In particular, in the case of the present disclosure, it is possible to block or appropriately control the accumulation or discharge of heat corresponding to the ignition source among the three elements (fuel, oxygen, and ignition source) that generate flames. Furthermore, in the case of the present disclosure, in order to block heat accumulation and prevent flame emission, the venting spaces DV1, DV2 that enable emission control of venting gas and directional venting may be easily implemented by a configuration including a cell cover 150 in which the height of both sides thereof is configured to be higher than the height of the battery cell 105.

Venting spaces DV1, DV2 capable of heat exchange and gas venting are formed above and below the battery cells 105, respectively, and gas in these venting spaces DV1, DV2 may be discharged to the exposed side of the cell cover 150. In addition, the venting spaces DV1, DV2 are provided for each cell unit 110 within each cell unit 110. In this case, even if thermal runaway occurs in any one battery cell 105, the flame or gas generated in that battery cell 105 may only be discharged to the venting spaces DV1, DV2 of the cell cover 150 and the exposed side of the cell cover 150 communicated therewith. Therefore, flame or gas may not spread to other battery cells 105 surrounded by other cell covers 150 disposed adjacent to the side of the battery cell 105 where thermal runaway occurs. That is, even if thermal runaway occurs in any one battery cell 105, the effect of the thermal runaway on the other battery cells 105 may be minimized. The propagation of flame or gas between the cell units 110 is clearly blocked. In this way, according to the present disclosure, efficient cooling and directional venting of the battery cell 105 are possible.

Meanwhile, in typical battery packs, a thermal resin is used to increase heat transfer performance between different components. The thermal resin is intended to reduce contact thermal resistance between members. If a cell with improved safety, such as an LFP pouch cell, is used as the battery cell 105, the battery pack 10 of the present disclosure may be cooled so efficiently that the thermal resin may be omitted. Therefore, manufacturing cost savings may also be achieved by omitting the thermal resin.

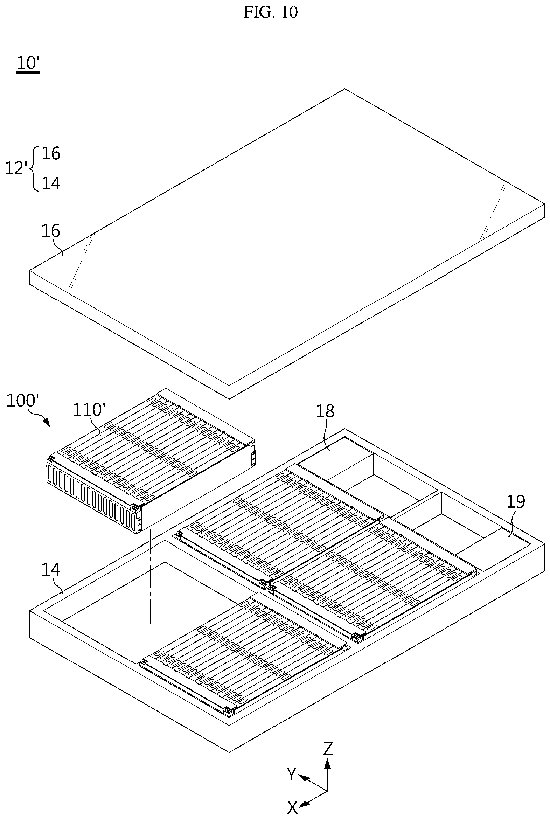

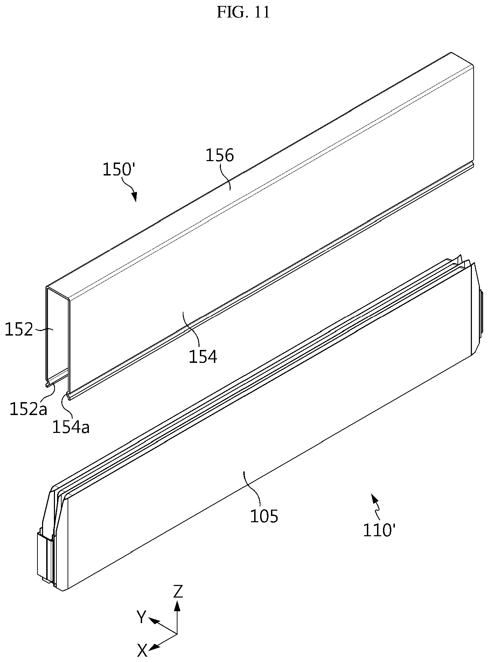

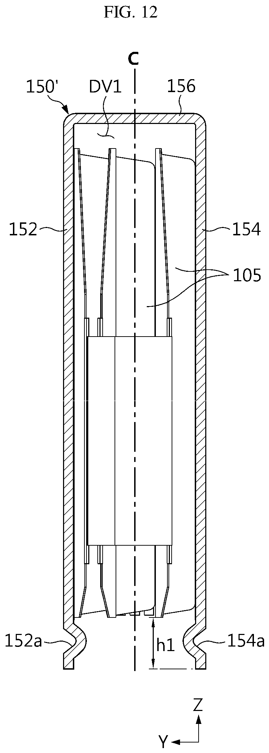

FIG. 10 is a perspective view schematically showing the main configuration of a battery pack according to another embodiment of the present disclosure, FIG. 11 is a perspective view schematically showing the configuration of a cell unit according to another embodiment of the present disclosure, and FIG. 12 is a schematic cross-sectional view of a cell unit according to another embodiment of the present disclosure. The same or similar reference numerals will be assigned to the same components as in the previous embodiment, and repeated descriptions will be omitted.

Referring to FIGS. 10 to 12, a battery pack 10' according to another embodiment of the present disclosure includes a battery assembly 100' including a plurality of cell units 110' and a pack case 12'.

The pack case 12' may have an empty space therein to accommodate a plurality of cell units 110'. For example, the pack case 12' may include a pack tray 14 and a pack cover 16. The pack tray 14 may be configured in the form of a box with an open top to accommodate a plurality of cell units 110' in the internal space. And, the pack cover 16 may be configured in the form of a cover that covers the top opening of the pack tray 14. In this case, the pack cover 16 may also be configured in the form of a box with an open bottom.

In the same manner as the cell unit 110 described above, the cell unit 110' may include a battery cell 105 and a cell cover 150' that partially surrounds and supports the battery cell 105. As shown in FIG. 11, the cell cover 150' may be configured to surround the battery cell 105 in the internal space of the pack case 12'.

The cell cover 150' may be directly seated on the bottom surface of the pack tray 14 in the embodiment of FIG. 10. In this case, a portion of the cell cover 150', such as the lower end of the cell cover 150', may be seated in direct contact with the bottom surface of the pack tray 14. And, when the lower end of the cell cover 150' is seated in this way, the cell cover 150' may be configured to stably maintain the seated state.

The cell cover 150' may be configured to partially surround the battery cell 105 so that at least one side of the wrapped battery cell 105 is exposed to the outside. That is, the cell cover 150' may be configured to cover only a portion of the battery cell 105 without fully surrounding the entire battery cell 105. In particular, the cell cover 150' may be configured such that the lower edge portion of the battery cell 105 is exposed toward the pack case 12'.

According to this embodiment, the lower edge portion of the battery cell 105 may be in direct contact with the bottom surface of the pack tray 14, so that the cooling performance of the battery pack 10' may be secured more effectively. That is, the heat emitted from each battery cell 105 may be directly transferred to the pack case 12', thereby improving cooling performance. In addition, in this case, since a separate cooling structure may not be required between the battery cell 105 and the pack case 12', efficient cooling performance may be implemented. And, in this case, there may be no space for a cooling medium such as air to flow in between the battery cells 105. Meanwhile, in the battery pack 10', a thermal interface material (TIM) may be interposed to increase heat transfer performance between different components. For example, TIM may be filled between the battery cell 105 and the cell cover 150', between the cell cover 150' and the pack case 12', and/or between the battery cell 105 and the pack case 12'. In this case, the cooling performance of the battery pack 10' may be further improved.

The TIM is intended to reduce contact thermal resistance between members. In the battery packs where cooling is important, it is necessary to improve the thermal performance of the entire system by using a material capable of minimizing contact thermal resistance. The TIM may be diverse, such as a thermally conductive grease, a thermal sheet, a thermal pad, a thermally conductive adhesive, and a phase change material (PCM). For a specific example, the TIM may be any one of a thermally conductive silicone-based bond, a thermally conductive silicone pad, and a thermally conductive acrylic bond. Heat-dissipating silicone-based adhesives and heat-dissipating acrylic adhesives are commercially available in one or two liquid types and may be applied between different components by means of coating or injection. The heat-dissipating silicone pad includes a base film such as double-sided tape and release paper on the top and bottom of it, which may be applied between different components by an adhesive method after removing the release paper. Since heat-dissipating silicone-based adhesives, heat-dissipating silicone pads, and heat-dissipating acrylic adhesives have higher thermal conductivity compared to general adhesives, the amount and speed of heat transfer between different components may be further increased. Therefore, according to this embodiment of the present disclosure, the heat dissipation performance of the battery cell 105 may be further improved, so that the cooling performance of the battery pack 10' may be further improved.

Meanwhile, the cell unit 110' is characterized in that it includes a beading portion on the cell cover 150' as a way of easily accommodating the battery cell 105 in the cell cover 150'.

For example, as shown in FIG. 12, the above-mentioned venting space DV1 is provided between the battery cell 105 and the cell cover 150', which is the same as the previous embodiment, and the cell cover 150' may have lower beading portions 152a, 154a in which the lower part of the lower edge portion of the battery cell 105 is recessed toward the internal space of the cell cover 150'.

That is, the cell cover 150' includes a first cover portion 152 and a second cover portion 154 in the same manner as the cell cover 150, but further includes the lower beading portions 152a, 154a at ends adjacent to an opening through which the first cover portion 152 and the second cover portion 154 expose the battery cell 105. The lower beading portions 152a, 154a are recessed inward toward the battery cell 105.

In addition, the cell unit 110' may be configured such that the lower edge portion of the battery cell 105 is positioned above the lowermost end of the cell cover 150', whereby the lower edge portion of the battery cell 105 is located higher than the lowermost end of the cell cover 150', as indicated by 'h1' in FIG 12.

More specifically, the lower beading portions 152a, 154a are provided at the lower ends of the first cover portion 152 and the second cover portion 154, and they are continuous along the longitudinal direction of the cell cover 150' as shown in FIG. 11, and the lower beading portion 152a at the bottom of the first cover portion 152 and the lower beading portion 154a at the bottom of the second cover portion 154 may be arranged symmetrically with respect to the center C of the cell cover 150' shown in FIG. 12. Accordingly, the cell cover 150' according to this embodiment may be configured such that the distance between the first cover portion 152 and the second cover portion 154 is narrow at the lower beading portions 152a, 154a.

Therefore, for example, when in a state where the first cover portion 152 and the second cover portion 154 are pulled in opposite directions from each other so that the gap between the first cover portion 152 and the second cover portion 154 is slightly widened, the lower edge portion of the battery cell 105 is inserted so as to be located above the lower beading portions 152a, 154a and then the first cover portion 152 and the second cover portion 154 are returned to their original state, the lower portion of the battery cell 105 may be supported by the lower beading portions 152a, 154a to be in a supported state by 'h1', as shown in FIG. 12. As shown in the embodiment of FIG. 12, when one cell unit 110' is formed of one cell cover 150' and three battery cells 105, an adhesive sheet may be applied to surfaces of the battery cells 105 facing each other, and an adhesive sheet may also be applied between one side of the outermost battery cell 105 and the first or second cover portions 152, 154. At this time, the bottom of the outermost battery cell 105 may be supported by the lower beading portions 152a, 154a, and the center battery cell 105 may be prevented from being separated in the downward direction by the pressing force acting in the lateral direction by the first and second cover portions 152, 154 and the adhesive force to the outermost battery cell 105.

According to this embodiment, the assembly may be guided so that the battery cells 105 are supported directly above the lower beading portions 152a, 154a of the cell cover 150. Therefore, the process for configuring the cell unit 110' so that the venting space DV1, which is the separation space between the third cover portion 156 of the cell cover 150 and the upper edge portion of the battery cell 105, is well maintained, and at the same time, the lower edge portion of the battery cell 105 is located above the lowermost end of the cell cover 150, may be made easier.

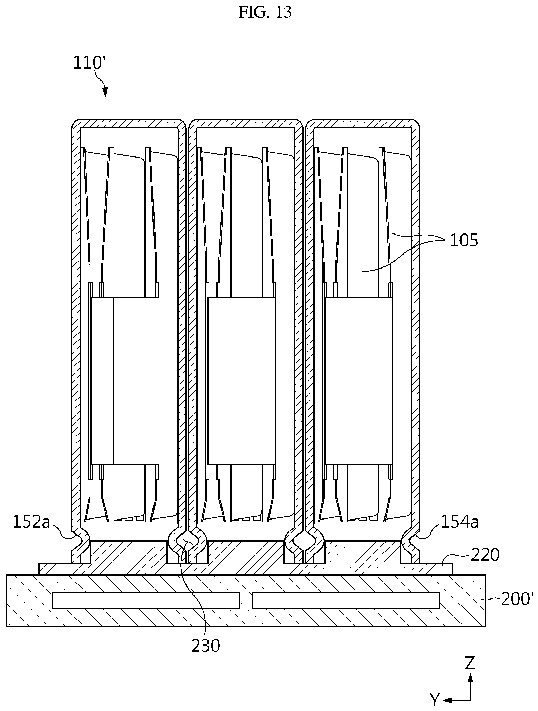

Meanwhile, as shown in FIG. 13, the battery pack 10' according to another embodiment of the present disclosure may be configured to include a heat sink 200'. In particular, the battery pack 10' may be arranged in the form of a heat sink where the bottom plate of the pack tray 14 has a flow path through which cooling water may flow for light weight and component simplicity.

And, according to the configuration of the cell cover 150' of this embodiment, the battery cells 105 may be disposed so that the lower edge portions thereof are exposed below the cell cover 150' through the lower opening of the cell cover 150' to face the bottom plate of the pack tray 14. A thermal resin 220 may be provided between the lower edge portions of the battery cells 105 and the bottom plate of the pack tray 14. Therefore, in the battery pack 10' according to another embodiment of the present disclosure, the heat of each battery cell 105 may be dissipated from the lower edge portion of each battery cell 105 → the thermal resin 220 → the pack tray 14 functioning as a heat sink 200'.

In this embodiment, a thermal resin 220 is interposed between the heat sink 200' and the plurality of battery cells 105. The thermal resin 220 may be applied to the upper surface of the heat sink 200'. And, on the upper surface of the heat sink 200' to which the thermal resin 220 is applied, a plurality of cell units 110', that is, a plurality of battery cells 105 and a plurality of cell covers 150' may be seated.

Here, the thermal resin 220 may be made of a material that conducts heat and has adhesive properties. The thermal resin 220 may transfer heat to the heat sink 200' so that the heat generated in the battery cell 105 is dissipated through the heat sink 200'. In addition, since the thermal resin 220 has adhesive properties, the cell cover 150' may be structurally coupled to the heat sink 200'.

In this embodiment, the plurality of battery cells 105 to which the cell cover 150' is coupled may be directly seated on the upper surface of the heat sink 200' to which the thermal resin 220 is applied. In this case, the plurality of cell units 110' may be stably coupled and fixed to the upper surface of the heat sink 200' by the thermal resin 220. In particular, the battery cell 105 and the cell cover 150' included in each cell unit 110' may be formed to have a length in the vertical direction (Z-axis direction) longer than a width in the left-right direction (Y-axis direction). Therefore, the battery cell 105 and the cell cover 150' can be said to be seated on the upper surface of the heat sink 200' in a standing state, that is, in an upright state. In this case, the thermal resin 220 may maintain the upright state of the cell cover 150' more stably.

In addition, according to the configuration of the lower beading portions 152a, 154a of the cell cover 150', an air layer 230 may be formed between the lower beading portion of any one cell unit 110' (e.g., the lower beading portion 154a of the left outermost battery cell 105) and the lower beading portion of the other cell unit 110' (e.g., the lower beading portion 152a of the center battery cell 105), as shown in FIG. 13. This air layer 230 may act to reduce the heat transfer rate between the cell units 110'. Therefore, the configuration of the lower beading portions 152a, 154a of the cell cover 150' also has a favorable effect in preventing heat transfer between the cell units 110'.

In addition, the cell cover 150' according to this embodiment may also favorably act to prevent swelling of the battery cells 105. When swelling battery cells 105, such as pouch-type battery cells, the swelling pressure acts in the direction of unfolding the lower beading portions 152a, 154a, at which time, the lower beading portions 152a, 154a have elastic restoring force, and the elastic restoring force acts in the direction of preventing swelling. In addition, the lower beading portions 152a, 154a of the cell cover 150' may distribute or absorb pressure during swelling of the battery cells 105, thereby favorably acting to reduce the possibility of cracking the cell cover 150' and minimize the amount of swelling by compressing the battery cells 105.

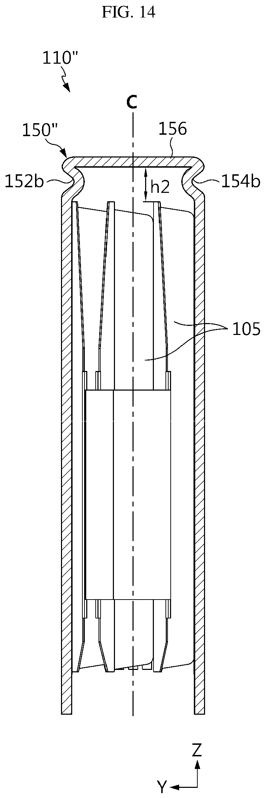

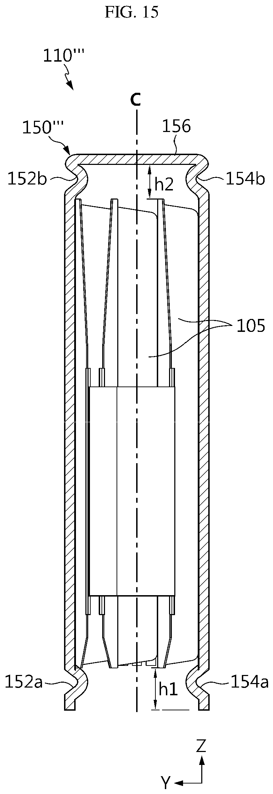

Next, other embodiments of the cell cover according to another embodiment of the present disclosure will be described with reference to FIGS. 14 and 15.

FIG. 14 is a view corresponding to FIG. 12 and illustrates another embodiment of the cell unit of FIG. 12, and FIG. 15 is a view corresponding to FIG. 12 and illustrates still another embodiment of the cell unit of FIG. 12.

As shown in FIG. 14, the cell cover 150" included in the cell unit 110" according to another embodiment of the present disclosure may be provided with a beading portion on the upper side. In other words, the cell cover 150" of this embodiment includes upper beading portions 152b, 154b provided on the upper end of the first cover portion 152 connected to the third cover portion 156 and the upper end of the second cover portion 154 connected to the third cover portion 156.

That is, the cell cover 150" includes a first cover portion 152 and a second cover portion 154 in the same manner as the cell cover 150 described above, but the first cover portion 152 and the second cover portion 154 further include upper beading portions 152b, 154b between the third cover portion 156 and the battery cell 105. The upper beading portions 152b, 154b are also recessed inward toward the battery cell 105.

The upper beading portions 152b, 154b are provided at the upper ends of the first cover portion 152 and the second cover portion 154, and like the lower beading portions 152a, 154a, they may be continuous along the longitudinal direction of the cell cover 150". And, the upper beading portion 152b at the top of the first cover portion 152 and the upper beading portion 154a at the top of the second cover portion 154 may be arranged symmetrically with respect to the center C of the cell cover 150" shown in FIG. 14. Accordingly, the cell cover 150" according to this embodiment may be configured such that the distance between the first cover portion 152 and the second cover portion 154 is narrow at the upper beading portions 152b, 154b.

According to this embodiment of FIG. 14, when the battery cells 105 are inserted into the cell cover 150", it is easy to leave the gap between the third cover portion 156 and the upper edge portion of the battery cell 105 constant, as indicated by 'h2' in FIG. 14. In addition, since the stress acting on the cell cover 150" during swelling of the battery cells 105 is mainly concentrated on the connection part of the third cover portion 156 and the first and second cover portions 152, 154, there is the greatest concern of damage to the corresponding part, but according to this embodiment, the stress may be distributed and absorbed during swelling of the battery cells 105, thereby effectively preventing damage to the cell cover 150".

As still another embodiment, as shown in FIG. 15, the cell cover 150‴ included in the cell unit 110‴ according to still another embodiment of the present disclosure may be provided with beading portions on the upper and lower sides, respectively. That is, the cell cover 150‴ according to still another embodiment of the present disclosure includes upper beading portions 152b, 154b provided on the upper end of the first cover portion 152 connected to the third cover portion 156 and the upper end of the second cover portion 154 connected to the third cover portion 156, and lower beading portions 152a, 154a provided on the lower end of the first cover portion 152 and the lower end of the second cover portion 154. This embodiment of FIG. 15 can be said to be an embodiment that has both the advantages of the lower beading portion according to FIG. 12 and the upper beading portion according to FIG. 14 described above.

In addition, the battery pack 10' according to an embodiment of the present disclosure may further include a control module 18 accommodated in the internal space of the pack case 12'. It is of course understood that the battery pack 10 described above may also further include such a control module. This control module 18 may include a BMS. The control module 18 is mounted in the internal space of the pack case 12' and may be configured to generally control the charge/discharge operation or data transmission/ reception operation of the battery cell 105. The control module 18 may be provided in a pack unit rather than a module unit. More specifically, the control module 18 may be provided to control the charge/discharge state, power state, and performance state of the battery cell 105 through pack voltage and pack current. The control module 18 estimates the state of the battery cells 105 within the battery pack 10' and manages the battery pack 10' using the estimated state information. For example, state information of the battery pack 10', such as state of charge (SOC), state of health (SOH), maximum input/output power allowance, and output voltage of the battery pack 10', is estimated and managed. And, using this state information, the charging or discharging of the battery pack 10' may be controlled, and furthermore, the replacement time of the battery pack 10' may also be estimated.

The battery packs 10', 10 may further include a battery disconnect unit 19. The battery disconnect unit 19 may be configured to control the electrical connection of the battery cells 105 to manage the power capacity and function of the battery packs 10, 10'. To this end, the battery disconnect unit 19 may include a power relay, a current sensor, a fuse, and the like. The battery disconnect unit 19 is also provided in a pack unit rather than a module unit, and various disconnect units known at the time of filing the present disclosure may be employed.

In addition, the battery packs 10, 10' according to the present disclosure may further include various components of battery packs known at the time of filing the present disclosure. For example, the battery packs 10, 10' according to an embodiment of the present disclosure may further include a manual service disconnector (MSD) that allows an operator to shut off the power by manually disconnecting the service plug. In addition, flexible busbars or cables for interconnecting the plurality of battery assemblies 100, 100' may also be further included.

Meanwhile, the battery assemblies 100, 100' according to various embodiments of the present disclosure may be applied not only to battery packs, but also to battery modules that have a separate case and are accommodated in a battery pack or a rack of an ESS.

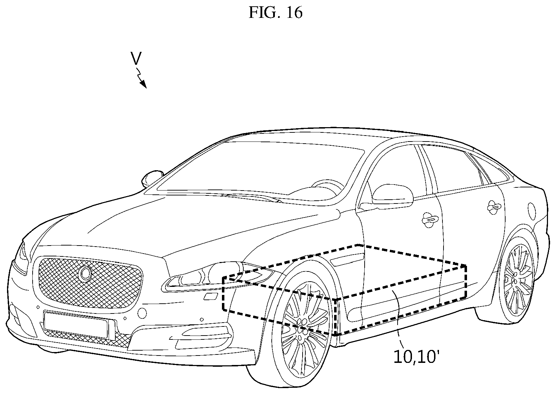

FIG. 16 shows a vehicle V according to an embodiment of the present disclosure.

As shown in FIG. 16, a vehicle V according to an embodiment of the present disclosure may include battery packs 10, 10' including at least one battery assembly according to any one of the various embodiments described above.

In this way, the battery packs 10, 10' provided in the vehicle V may provide electrical energy required for various operations of the vehicle V. Here, the vehicle V may include, for example, a predetermined vehicle that uses electricity as a driving source, such as an electric vehicle or a hybrid vehicle. Alao, in addition to the battery packs 10, 10' according to the present disclosure, the vehicle V may further include various other components included in the vehicle, such as a vehicle body, a motor, or the like.

The battery packs 10, 10' may be disposed at a predetermined location within the vehicle V. The battery packs 10, 10' may be used as an electrical energy source to drive the vehicle V by providing driving force to the motor of the electric vehicle. In this case, the battery packs 10, 10' have a high nominal voltage of 100 V or more.

The battery packs 10, 10' may be charged or discharged by an inverter depending on the driving of the motor and/or internal combustion engine. The battery packs 10, 10' may be charged by a regenerative charging device coupled to a brake. The battery packs 10, 10' may be electrically connected to the motor of the vehicle V through an inverter.

Meanwhile, the terms indicating directions as used herein such as upper, lower, left, right, front, and rear are used for convenience of description only, and it is obvious to those skilled in the art that the term may change depending on the position of the stated element or an observer.

The present disclosure has been described hereinabove with reference to specific embodiments. However, it will be clearly understood to those skilled in the art that various modified embodiments may be implemented within the technical scope of the present disclosure. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### [Explanation of reference signs]

| | | | |
|---|---|---|---|
| 10, 10': | battery pack | 12: | pack case |
| 100: | battery assembly | 105: | battery cell |
| 107: | electrode lead | 110, 110': | cell unit |
| 150, 150', 150", 150'": | cell cover | | |
| 152: | first cover portion | 154: | second cover portion |
| 156: | third cover portion | 152a, 154a: | lower beading portion |
| 152b, 154b: | upper beading portion | 200, 200': | heat sink |
| 210: | fixing groove | 220: | thermal resin |
| 230: | air layer | DV1, DV2: | venting space |
| V: | vehicle | | |

## Claims

1. A battery pack comprising:
a battery assembly comprising a plurality of cell units; and
a pack case accommodating the battery assembly in the internal space,
wherein each cell unit comprises at least one battery cell and a cell cover at least partially surrounding the outside of the at least one battery cell,
wherein a venting space is provided between the cell cover and the battery cell.

2. The battery pack according to claim 1,
wherein the cell cover is configured to support the at least one battery cell in an upright state.

3. The battery pack according to claim 1,
wherein the cell cover partially surrounds the battery cell so that at least one side of the wrapped battery cell forms an opening exposed toward the pack case.

4. The battery pack according to claim 1,
wherein the cell cover is configured in a form of bending one plate.

5. The battery pack according to claim 1,
wherein the cell cover comprises an insulating coating layer on the inner surface.

6. The battery pack according to claim 1,
wherein the cell cover comprises:
a first cover portion covering one side of the at least one battery cell;
a second cover portion covering the other side of the at least one battery cell; and
a third cover portion connecting the first cover portion and the second cover portion and covering one edge portion of the at least one battery cell.

7. The battery pack according to claim 6,
wherein the venting space is provided between the battery cell and the third cover portion.

8. The battery pack according to claim 6,
wherein the at least one battery cell is adhered and fixed to inner surfaces of the first cover portion and the second cover portion.

9. The battery pack according to claim 6,
wherein an end of the first cover portion that is not connected to the third cover portion and an end of the second cover portion that is not connected to the third cover portion form an opening where one side of the battery cell is exposed toward the pack case.

10. The battery pack according to claim 6,
wherein the at least one battery cell is disposed between the first and second cover portions of the cell cover, but to be spaced apart from the third cover portion to form a predetermined space therebetween.

11. The battery pack according to claim 6,
wherein a vertical length of the first and second cover portions of the cell cover is longer than a vertical length of the at least one battery cell.

12. The battery pack according to claim 6,
which further comprises a heat sink cooling the cell unit in thermal contact with the cell unit.

13. The battery pack according to claim 12,
wherein the cell cover is in contact with the heat sink.

14. The battery pack according to claim 12,
wherein both ends of the cell cover extend toward the heat sink, but longer than the end of the at least one battery cell disposed between the first cover portion and the second cover portion to form a predetermined space between the at least one battery cell and the heat sink.

15. The battery pack according to claim 14,
wherein the heat sink has a fixing groove into which both ends of the cell cover are inserted and fixed.

16. The battery pack according to claim 9,
wherein the first cover portion and the second cover portion further comprise lower beading portions formed at ends adjacent to the opening and recessed inward toward the battery cell.

17. The battery pack according to claim 16,
wherein the lower beading portion is configured to be continuous along the longitudinal direction of the cell cover.

18. The battery pack according to claim 16,
wherein the lower beading portion of the first cover portion and the lower beading portion of the second cover portion are arranged symmetrically with respect to the center of the cell cover.

19. The battery pack according to claim 6,
wherein the first cover portion and the second cover portion further comprise upper beading portions recessed inward toward the battery cell between the third cover portion and the battery cell.

20. The battery pack according to claim 19,
wherein the upper beading portion is configured to be continuous along the longitudinal direction of the cell cover.

21. The battery pack according to claim 20,
wherein the upper beading portion of the first cover portion and the upper beading portion of the second cover portion are arranged symmetrically with respect to the center of the cell cover.

22. The battery pack according to claim 16,
wherein the first cover portion and the second cover portion further comprise upper beading portions recessed inward toward the battery cell between the third cover portion and the battery cell.

23. A vehicle comprising a battery pack according to any one of claims 1 to 22.
